# EUROPÄISCHE PATENTANMELDUNG

(11) **EP 4 711 245 A1**
(43) Veröffentlichungstag der Anmeldung: **18.03.2026**
(21) Anmeldenummer: 25199580.9
(22) Anmeldetag: 02.09.2025
(51) Int. Cl.: B62D 15/02, B60W 30/09

(54) **VERFAHREN ZUR KOLLISIONSVERMEIDUNG FÜR EIN KRAFTFAHRZEUG, ASSISTENZSYSTEM FÜR EIN KRAFTFAHRZEUG UND KRAFTFAHRZEUG**

(30) Priorität: 12.09.2024 DE 102024208676
(71) Anmelder: VOLKSWAGEN AG, 38440 Wolfsburg (DE)
(72) Erfinder: Milch, Stefan, 38440 Wolfsburg (DE); Klingemann, Timo, 38440 Wolfsburg (DE)

(57) **Zusammenfassung**

Die Erfindung betrifft ein Verfahren zur Kollisionsvermeidung für ein Kraftfahrzeug (200), umfassend die Schritte:
- Einleiten eines automatisierten Ausweichmanövers (10) des Kraftfahrzeugs (200) mit mindestens einer ersten Ausweichbewegung (11),
- Fortsetzen des automatisierten Ausweichmanövers (10) mit mindestens einer weiteren Ausweichbewegung (12), wenn ein Zeitfenster (Z) zur Korrektur des automatisierten Ausweichmanövers (10) abgelaufen ist, wobei die mindestens eine weitere Ausweichbewegung (12) von der mindestens einen ersten Ausweichbewegung (11) verschieden ist,
sowie ein Assistenzsystem (100) für ein Kraftfahrzeug (200) und ein Kraftfahrzeug (200).

## Beschreibung

Die Erfindung betrifft ein Verfahren zur Kollisionsvermeidung für ein Kraftfahrzeug, ein Assistenzsystem für ein Kraftfahrzeug und ein Kraftfahrzeug.

Assistenzsysteme kommen in Kraftfahrzeugen wie z.B. PKW oder LKW zum Einsatz, um den Fahrer im Straßenverkehr sensorisch und aktorisch zu unterstützen oder im vollautomatisierten Fahren (z.B. SAE Level 5) sogar zu ersetzen. Hierbei können Assistenzsysteme insbesondere eingesetzt werden, um Kollisionen mit Hindernissen zu vermeiden und auf diese Weise die Sicherheit im Straßenverkehr zu erhöhen.

Aus der DE 10 2018 221 241 A1 ist ein Fahrassistenzsystem für ein Kraftfahrzeug, ein entsprechendes Kraftfahrzeug mit einem derartigen Fahrassistenzsystem und ein Verfahren zum Betreiben eines solchen Kraftfahrzeugs bekannt.

Es stellt sich das technische Problem, ein Verfahren zur Kollisionsvermeidung für ein Kraftfahrzeug, ein Assistenzsystem für ein Kraftfahrzeug und ein Kraftfahrzeug zu schaffen, welche eine Sicherheit im Straßenverkehr erhöhen können.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Kollisionsvermeidung für ein Kraftfahrzeug, umfassend die Schritte:
- Einleiten eines automatisierten Ausweichmanövers des Kraftfahrzeugs mit mindestens einer ersten Ausweichbewegung,
- Fortsetzen des automatisierten Ausweichmanövers mit mindestens einer weiteren Ausweichbewegung, wenn ein Zeitfenster zur Korrektur des automatisierten Ausweichmanövers abgelaufen ist, wobei die mindestens eine weitere Ausweichbewegung von der mindestens einen ersten Ausweichbewegung verschieden ist.

Weiter vorgeschlagen wird ein Assistenzsystem für ein Kraftfahrzeug, wobei das Assistenzsystem dazu ausgebildet ist, ein Verfahren nach einer in dieser Offenbarung beschriebenen Ausführungsform auszuführen.

Weiter vorgeschlagen wird ein Kraftfahrzeug, umfassend mindestens ein Assistenzsystem nach einer in dieser Offenbarung beschriebenen Ausführungsform. Das Kraftfahrzeug kann z.B. ein PKW oder ein LKW sein.

Selbstverständlich treffen die im Folgenden für das Verfahren genannten technischen Effekte und Vorteile ebenso auf das Assistenzsystem und das Kraftfahrzeug zu.

Durch das vorgeschlagene Verfahren wird während der ersten Ausweichbewegung eine Möglichkeit zur Korrektur des automatisierten Ausweichmanövers geboten. Dies hat den Effekt, dass das bereits eingeleitete Ausweichmanöver z.B. abgebrochen werden kann oder verändert werden kann. Gleichzeitig wird das Ausweichmanöver bereits ausgeführt, wodurch die zur Verfügung stehende Zeit optimal zur Kollisionsvermeidung genutzt wird. Nach Ablauf des Zeitfensters wird das eingeleitete Ausweichmanöver mit der weiteren Ausweichbewegung automatisiert fortgesetzt, wobei sich die weitere Ausweichbewegung von der ersten Ausweichbewegung z.B. durch eine andere Fahrdynamik unterscheidet. Dies hat den Effekt, dass die erste Ausweichbewegung durch die weitere Ausweichbewegung ergänzt wird und die verbleibende Zeit nach Ablauf des Zeitfensters effizient zum automatisierten Manövrieren des Kraftfahrzeugs genutzt wird. Beispielsweise kann das Kraftfahrzeug durch die weitere Ausweichbewegung in einem fahrdynamischen Grenzbereich manövriert werden, welcher in der ersten Ausweichbewegung nicht ausgereizt wurde, um z.B. den Fahrer nicht durch eine heftige erste Ausweichbewegung zu überraschen. Auf diese Weise wird die Sicherheit im Straßenverkehr erhöht.

Das Assistenzsystem kann eine Detektionseinrichtung zur Detektion eines Kollisionsrisikos umfassen. Die Detektionseinrichtung kann z.B. als eine in Fahrtrichtung gerichtete Kamera mit einem Mikrocontroller ausgebildet sein. Das Assistenzsystem kann z.B. eine Steuereinrichtung zum Erzeugen von Steuerbefehlen umfassen. Die Steuereinrichtung kann z.B. als ein Mikrocontroller ausgebildet sein. Das Assistenzsystem kann z.B. einen Aktor zum Ausführen der Ausweichbewegungen umfassen. Der Aktor kann z.B. als ein hydraulisch angetriebener Brems- und/oder Lenkaktor ausgebildet sein.

Das Einleiten des Ausweichmanövers kann z.B. als Reaktion auf ein sensorisch detektiertes Kollisionsrisiko erfolgen. Beispielsweise kann die erste Ausweichbewegung ausgeführt werden, sobald das detektierte Kollisionsrisiko einen kritischen Risikoschwellwert übersteigt. Das Ausweichmanöver kann z.B. durch einen ersten Steuerbefehl eingeleitet werden.

Die erste Ausweichbewegung kann z.B. eine erste Verzögerung des Kraftfahrzeugs umfassen oder als solche ausgebildet sein. Die erste Ausweichbewegung vermindert insbesondere das initial detektierte Kollisionsrisiko. Die erste Verzögerung kann der Fahrer z.B. als leichtes, automatisiertes Bremsen wahrnehmen. Selbstverständlich kann die erste Ausweichbewegung kumulativ oder alternativ eine erste Lenkbewegung umfassen, die das Kraftfahrzeug z.B. sanft aus einem Kollisionsbereich herausmanövriert. Die erste Ausweichbewegung kann insbesondere ohne einen visuellen oder akustischen Warnhinweis ausgeführt werden. Der Fahrer kann durch die erste Ausweichbewegung auf das detektierte Kollisionsrisiko hingewiesen werden - diese dient also als Warnhinweis. Der erste Steuerbefehl kann z.B. Parameter zum Einstellen der ersten Ausweichbewegung umfassen. Die erste Ausweichbewegung kann z.B. mittels des zuvor genannten Aktors ausgeführt werden. Die Parameter können z.B. eine Aktorkraft oder Aktorauslenkung parametrisieren.

Das Zeitfenster zur Korrektur kann mit Einleiten des automatisierten Ausweichmanövers beginnen. Das Zeitfenster kann z.B. auf eine Sekunde voreingestellt sein. Innerhalb des Zeitfensters ist es dem Fahrer oder dem Assistenzsystem ermöglicht, Einfluss auf das eingeleitete Ausweichmanöver zu nehmen. Innerhalb des Zeitfensters kann das Ausweichmanöver z.B. abgebrochen oder zumindest eingestellt werden. Auf diese Weise kann z.B. ein unnötiges Ausweichmanöver beendet werden oder ein notwendiges Ausweichmanöver nachjustiert werden. Selbstverständlich kann das Ausweichmanöver innerhalb des Zeitfensters auch bestätigt werden, z.B. durch eine Eingabe des Fahrers. Mit Bestätigung des Ausweichmanövers kann das Zeitfenster als abgelaufen gelten, unabhängig von dem initial voreingestellten Zeitfenster. Das Zeitfenster kann z.B. mittels der zuvor genannten Steuereinrichtung zeitlich überwacht werden.

Das Fortsetzen des automatisierten Ausweichmanövers kann z.B. unmittelbar nach Ablauf des Zeitfensters erfolgen. Das Ausweichmanöver kann z.B. durch einen weiteren Steuerbefehl fortgesetzt werden. Der weitere Steuerbefehl kann z.B. Parameter zum Einstellen der weiteren Ausweichbewegung Aktors umfassen. Die weitere Ausweichbewegung kann z.B. mittels des zuvor genannten Aktors ausgeführt werden.

Die weitere Ausweichbewegung kann z.B. eine weitere Lenkbewegung umfassen oder als solche ausgebildet sein. Die weitere Ausweichbewegung vermindert insbesondere ein nach der ersten Ausweichbewegung verbleibendes Kollisionsrisiko. Die weitere Ausweichbewegung kann das Kraftfahrzeug z.B. abrupt entlang eines Ausweichwegs aus einem Kollisionsbereich herausmanövrieren. Die weitere Ausweichbewegung kann eine höhere Querbeschleunigung als die erste Ausweichbewegung aufweisen, wobei das Kraftfahrzeug z.B. in einem fahrdynamischen Grenzbereich aus dem Kollisionsbereich herausmanövriert wird. Selbstverständlich kann sich die weitere Ausweichbewegung von der ersten Ausweichbewegung auch durch eine geringere Querbeschleunigung unterscheiden, wenn z.B. das Kollisionsrisiko bereits ausreichend durch die erste Ausweichbewegung vermindert oder sogar ausgeräumt ist. Die weitere Ausweichbewegung kann kumulativ oder alternativ eine weitere Verzögerung umfassen, die das Kraftfahrzeug bremst. Die weitere Ausweichbewegung kann z.B. mittels des zuvor genannten Aktors ausgeführt werden.

In einer Ausführungsform umfasst die mindestens eine erste Ausweichbewegung einen ersten Lenkwinkelverlauf und die mindestens eine weitere Ausweichbewegung umfasst einen weiteren Lenkwinkelverlauf, wobei der weitere Lenkwinkelverlauf einen betragsmäßig größeren Lenkwinkel als der erste Lenkwinkelverlauf aufweist. Auf diese Weise wird ein maximaler Lenkeinschlag erst durch die weitere Ausweichbewegung erreicht. Der Betrag des Lenkwinkels kann z.B. in rad angegeben werden. Der jeweilige Lenkwinkelverlauf kann z.B. linear ausgebildet sein. Der jeweilige Lenkwinkelverlauf kann z.B. durch Parameter eingestellt werden. Insbesondere kann der erste Lenkwinkelverlauf mindestens eine erste Steigung aufweisen, wobei der weitere Lenkwinkelverlauf mindestens eine weitere Steigung aufweisen kann, wobei die mindestens eine weitere Steigung größer als die mindestens eine erste Steigung sein kann. Auf diese Weise kann z.B. die Lenkwinkelgeschwindigkeit während der weiteren Ausweichbewegung gegenüber der ersten Ausweichbewegung gesteigert werden.

In einer Ausführungsform ist ein Übergang von der ersten Ausweichbewegung zu der weiteren Ausweichbewegung nicht differenzierbar. Durch den nicht differenzierbaren Übergang kann der Fahrer das Fortsetzen des Ausweichmanövers haptisch wahrnehmen, z.B. als Ruck im Lenkrad. Der nicht differenzierbare Übergang kann z.B. als ein Steigungswechsel bzw. Knick von dem zuvor beschriebenen ersten Lenkwinkelverlauf zu dem weiteren Lenkwinkelverlauf erreicht werden. Der nicht differenzierbare Übergang kann sich z.B. als ein Sprung in der Lenkwinkelgeschwindigkeit zwischen den beiden Ausweichbewegungen äußern.

In einer Ausführungsform umfasst die mindestens eine weitere Ausweichbewegung mehrere Sequenzen, wobei in mindestens einer Sequenz ein Betrag des Lenkwinkels abnimmt und in mindestens einer darauffolgenden Sequenz ein Betrag des Lenkwinkels zunimmt, wobei die mindestens eine Sequenz zeitlich kürzer als die mindestens eine darauffolgende Sequenz ist. Auf diese Weise kann der fahrdynamische Grenzbereich des Kraftfahrzeugs während der weiteren Ausweichbewegung stärker ausgereizt werden. Denn ein Abbau des Lenkwinkels geht mit einer geringeren Gefahr eines Ausbrechens des Kraftfahrzeugs einher als eine Zunahme des Lenkwinkels und kann daher zeitlich schneller durchgeführt werden als die Zunahme des Lenkwinkels.

In einer Ausführungsform wird die mindestens eine weitere Ausweichbewegung derart eingestellt, dass das Kraftfahrzeug mindestens ein Klothoidensegment durchfährt. Dies macht das Ausweichmanöver besonders stabil, da während des jeweiligen Klothoidensegments eine gleichmäßige, progressive Änderung Lenkwinkels erfolgt. Hierdurch werden abrupte Änderungen in den Querkräften vermieden und das Risiko eines Ausbrechens des Kraftfahrzeugs reduziert. Das Kraftfahrzeug kann während des Ausweichmanövers eine Wegstrecke zurücklegen, die zumindest teilweise einer Klothoide entspricht. Ein Teil dieser Wegstrecke kann ein Klothoidensegment ausbilden. Selbstverständlich kann alternativ oder kumulativ die mindestens eine erste Ausweichbewegung derart eingestellt werden, dass das Kraftfahrzeug mindestens ein Klothoidensegment durchfährt. Dies kann das Risiko eines Ausbrechens des Kraftfahrzeugs während der ersten Ausweichbewegung reduzieren.

In einer Ausführungsform wird das Zeitfenster in Abhängigkeit eines detektierten Kollisionsrisikos bestimmt. Auf diese Weise kann eine Dauer des Zeitfensters an das detektierte Kollisionsrisiko angepasst werden, sodass das Zeitfenster z.B. bei einem hohen Kollisionsrisiko kürzer sein kann als bei einem niedrigen Kollisionsrisiko und umgekehrt. Das Kollisionsrisiko kann z.B. in Prozent angegeben werden, wobei nahezu 0% ein sehr niedriges Kollisionsrisiko angeben und nahezu 100% ein sehr hohes Kollisionsrisiko.

In einer Ausführungsform wird das Zeitfenster in Abhängigkeit von ermittelten Fahrerdaten bestimmt. Auf diese Weise kann die Dauer des Zeitfensters z.B. an ein aktuelles Fahrverhalten des Fahrers angepasst werden. Beispielsweise kann das Zeitfenster länger sein, wenn die ermittelten Fahrerdaten eine Müdigkeit des Fahrers angeben oder das Zeitfenster kann kürzer sein, wenn die ermittelten Fahrerdaten eine Wachsamkeit des Fahrers angeben. Das Ermitteln von Fahrerdaten ist dem Fachmann geläufig. Das Assistenzsystem kann z.B. eine Ermittlungseinrichtung zum Ermitteln von Fahrerdaten umfassen. Die Ermittlungseinrichtung kann z.B. als eine auf den Fahrer gerichtete Kamera mit Mikrocontroller ausgebildet sein.

In einer Ausführungsform wird die mindestens eine weitere Ausweichbewegung innerhalb des Zeitfensters eingestellt. Hierdurch kann das Zeitfenster dazu genutzt werden, die Genauigkeit und Sicherheit des eingeleiteten Ausweichmanövers zu erhöhen. Beispielsweise kann die am besten geeignete weitere Ausweichbewegung während des Zeitfensters ermittelt werden. Die weitere Ausweichbewegung kann in Abhängigkeit eines verbleibenden Kollisionsrisikos eingestellt werden. Das verbleibende Kollisionsrisiko kann z.B. während des Zeitfensters detektiert werden. Die zuvor erläuterte Detektionseinrichtung des Assistenzsystems kann dazu ausgebildet sein, während des Zeitfensters das verbleibende Kollisionsrisiko zu detektieren. Die weitere Ausweichbewegung kann z.B. durch Parameter eingestellt werden, die das detektierte, verbleibende Kollisionsrisiko vermindern. Die Parameter der weiteren Ausweichbewegung, die das verbleibende Kollisionsrisiko vermindern, können z.B. aus Versuchen oder Simulationen vorbekannt sein.

In einer Ausführungsform wird die mindestens eine weitere Ausweichbewegung derart eingestellt, dass während des Ausweichmanövers eine maximale Querkraft erreicht wird, ohne eine Kraftschlussgrenze zwischen Kraftfahrzeug und Fahrbahn zu überschreiten. Auf diese Weise verliert das Kraftfahrzeug während der weiteren Ausweichbewegung nicht die Haftung und gerät nicht ins Schleudern, kann aber dennoch im fahrdynamischen Grenzbereich automatisiert bewegt werden. Die maximale Querkraft bezeichnet insbesondere eine physikalisch maximal zulässige Kraft in einer Querrichtung - also z.B. senkrecht zu der Fahrtrichtung des Kraftfahrzeugs und senkrecht zu der Schwerkraft - ohne dass das Kraftfahrzeug die Haftung zur Fahrbahn verliert. Die Kraftschlussgrenze bezeichnet insbesondere ein Verhältnis der maximalen Querkraft zu einer Normalkraft. Die Normalkraft ist z.B. die auf das Kraftfahrzeug wirkende Schwerkraft. Die maximale Querkraft und Normalkraft wirken während der weiteren Ausweichbewegung z.B. zwischen den Reifen des Kraftfahrzeugs und der Fahrbahn. Die Kraftschlussgrenze kann z.B. als ein Reibwert zwischen der Fahrbahn und dem Kraftfahrzeug vorbekannt sein. Der Reibwert kann kumulativ oder alternativ sensorisch detektiert werden. Das Assistenzsystem kann z.B. eine Sensoreinrichtung zum Detektieren des Reibwerts umfassen. Insbesondere kann die weitere Ausweichbewegung z.B. durch Parameter derart eingestellt werden, dass ein Verhältnis von einer Querkraft zur einer Normalkraft während des Ausweichmanövers die Kraftschlussgrenze um nicht mehr als eine vorbekannte Abweichung unterschreitet und auf diese Weise die maximale Querkraft erreicht wird. Die Abweichung kann z.B. 10% des Reibwerts betragen. Die Parameter zum Einstellen der weiteren Ausweichbewegung können z.B. aus Versuchen oder Simulationen vorbekannt sein.

Die Erfindung wird anhand von Ausführungsbeispielen näher erläutert. Die Figuren zeigen:
- Fig. 1: eine schematische Darstellung eines automatisieren Ausweichmanövers,
- Fig. 2: ein schematisches Diagramm eines Ausweichwegs quer zu einer Fahrbahnrichtung,
- Fig. 3: ein schematisches Diagramm eines Lenkwinkels über einer Wegstrecke des Ausweichmanövers und
- Fig. 4: ein schematisches Diagramm einer Lenkwinkelgeschwindigkeit über der Zeit.

Nachfolgend bezeichnen gleiche Bezugszeichen Elemente mit gleichen technischen Merkmalen.

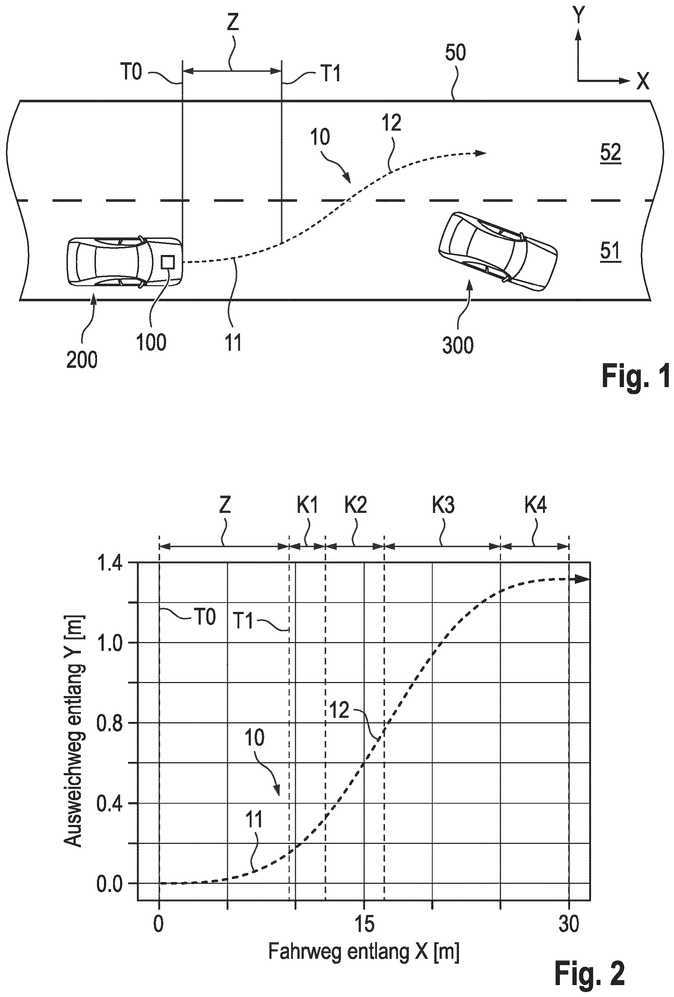

Fig. 1 zeigt eine schematische Darstellung eines Ausweichmanövers 10 aus einer Draufsicht.

In Fig. 1 ist ein als PKW ausgebildetes Kraftfahrzeug 200 gezeigt, der auf einer Fahrspur 51 einer Fahrbahn 50 mit ca. 50 km/h fährt. Die Fahrbahn 50 weist zwei Fahrspuren 51, 52 auf, die in Fig. 1 durch eine Strichlinie voneinander getrennt sind. Auf der Fahrspur 51 befindet sich vor dem Kraftfahrzeug 200 in einer Fahrbahnrichtung X ein Hindernis 300. Bei dem Hindernis 300 handelt es sich z.B. um einen auf der Fahrspur 51 schräg stehenden, defekten PKW. Eine Detektionseinrichtung (nicht dargestellt) des Kraftfahrzeugs 200 kann detektieren, dass ein Kollisionsrisiko aufgrund des Hindernisses 300 besteht, das durch das Ausweichmanöver 10 in z.B. die benachbarte Fahrspur 52 vermindert, insbesondere ausgeräumt, werden kann.

Das Kraftfahrzeug 200 umfasst ein Assistenzsystem 100, welches dazu ausgebildet ist, ein Verfahren zur Kollisionsvermeidung auszuführen. Die zuvor genannte Detektionseinrichtung kann Teil des Assistenzsystems 100 sein. Das von dem Assistenzsystem 100 ausgeführte Verfahren umfasst zumindest die im Folgenden beschriebenen Schritte:
In einem Schritt wird das Ausweichmanöver 10 automatisiert mit einer ersten Ausweichbewegung 11 eingeleitet, z.B. als Reaktion auf das detektierte Kollisionsrisiko. Zeitgleich zum Einleiten des Ausweichmanövers 10 beginnt ein Zeitfenster Z zur Korrektur des automatisierten Ausweichmanövers 10.

In Fig. 1 ist ein Fahrweg, den das Kraftfahrzeug 200 während des Zeitfensters Z in der Fahrbahnrichtung X zurücklegt, durch einen Doppelpfeil gekennzeichnet. Ein zeitlicher Beginn T0 und ein zeitliches Ende T1 des Zeitfensters Z sind in Fig. 1 jeweils durch eine vertikale gestrichelte Linie gekennzeichnet, die jeweils mit einem Ort korrespondiert, an welchem sich das Kraftfahrzeug 200 zu den Zeitpunkten T0, T1 in Fahrbahnrichtung X befindet. Der Abstand zwischen diesen vertikalen Linien wird in Fig. 1 durch das Bezugszeigen des Zeitfensters Z gekennzeichnet.

Innerhalb des Zeitfensters Z kann das Ausweichmanöver 10 z.B. durch den Fahrer des Kraftfahrzeugs 200 oder durch das Assistenzsystem 100 korrigiert werden. Auf diese Weise kann z.B. ein - aus Sicht des Fahrers - unnötiges Ausweichmanöver 10 abgebrochen werden oder das Ausweichmanöver 10 durch den Fahrer oder das Assistenzsystem 100 eingestellt werden.

Das Zeitfenster Z kann in Abhängigkeit von dem detektierten Kollisionsrisiko bestimmt werden. Ist das detektierte Kollisionsrisiko z.B. größer als ein vorbekannter Risikowert, so kann das Zeitfenster Z gegenüber einer voreingestellten Dauer von einer Sekunde z.B. auf eine halbe Sekunde verkürzt werden. Hierdurch kann das Ausweichmanöver 10 so schnell wie möglich mit einer weiteren Ausweichbewegung 12 fortgesetzt werden.

Alternativ oder kumulativ kann das Zeitfenster Z in Abhängigkeit von ermittelten Fahrerdaten bestimmt werden. Das Assistenzsystem 100 kann hierzu eine Ermittlungseinrichtung (nicht dargestellt) zum Ermitteln von Fahrerdaten umfassen, wobei die Fahrerdaten z.B. eine aktuelle Müdigkeit des Fahrers angeben können. Ist die aktuelle Müdigkeit des Fahrers z.B. über einem vorbekannten Müdigkeitsschwellwert, kann das Zeitfenster Z gegenüber der voreingestellten Dauer verlängert werden, um dem Fahrer mehr Zeit zur Korrektur des Ausweichmanövers 10 einzuräumen. Die Verlängerung des Zeitfensters Z kann allerdings ausgeschlossen sein, wenn das detektierte Kollisionsrisiko über dem zuvor genannten Risikowert liegt.

In einem weiteren Schritt wird das automatisierte Ausweichmanöver des Verfahrens mit der weiteren Ausweichbewegung 12 fortgesetzt, wenn das Zeitfenster Z abgelaufen ist (d.h. zum Zeitpunkt T1).

Die weitere Ausweichbewegung 12 kann z.B. durch Parameter einer Aktorkraft eines Aktors (nicht dargestellt) des Kraftfahrzeugs 200 derart eingestellt werden, dass die weitere Ausweichbewegung 12 eine maximale Querkraft (in Querrichtung Y) erreicht, sodass das Kraftfahrzeug 200 in einem fahrdynamischen Grenzbereich aus der Fahrspur 51 herausmanövriert werden kann, ohne ins Schleudern zu geraten. Das automatisierte Ausweichmanöver 10 ist z.B. erfolgreich beendet, wenn das Kraftfahrzeug 200 den Spurwechsel beendet hat und das Kraftfahrzeug 200 stabil in der Fahrspur 52 fährt, d.h. wenn keine Querkraft mehr auf das Kraftfahrzeug 200 wirkt.

Fig. 2 zeigt ein schematisches Diagramm eines Ausweichwegs (in Metern) in einer Querrichtung Y entlang eines Fahrwegs (in Metern) eines Kraftfahrzeugs 200 entlang einer Fahrbahnrichtung X. Der Verlauf des Ausweichwegs korrespondiert mit dem in Fig. 1 gezeigten Ausweichmanöver 10. In Fig. 2 ist zusätzlich erkennbar, dass der Ausweichweg in Querrichtung Y z.B. ca. 1,4 Metern beträgt und das Ausweichmanöver 10 entlang der Fahrbahnrichtung X ca. 30 Meter beträgt.

Ferner ist in Fig. 2 erkennbar, dass die weitere Ausweichbewegung 12 mehrere Klothoidensegmente K1, ..., K4 umfasst, wobei die Ausweichbewegung 12 segmentiert ist (durch Doppelpfeile gekennzeichnet). In jedem Klothoidensegmente K1, ..., K4 erfolgt eine gleichmäßige, progressive Änderung der auf das Kraftfahrzeug 200 wirkenden Querkraft. Hierdurch ist die Stabilität des Kraftfahrzeugs 200 während des Ausweichmanövers 10 erhöht, da während eines Klothoidensegments K1, ..., K4 keine sprunghafte Änderung der Querkraft auftritt. Dies wird im Folgenden noch näher erläutert.

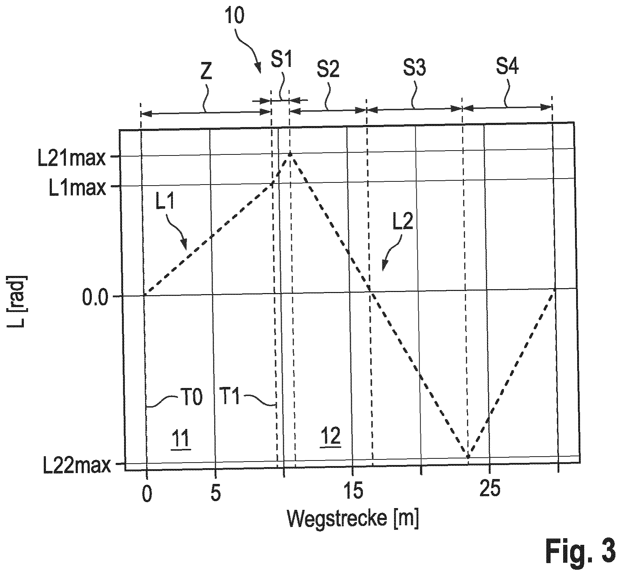

Fig. 3 zeigt ein schematisches Diagramm eines Lenkwinkels L über einer Wegstrecke des Ausweichmanövers 10. Die Wegstrecke kann z.B. einer Bogenlänge des in Fig. 1 und Fig. 2 gezeigten Ausweichmanövers 10 entsprechen.

Eine erste Ausweichbewegung 11 unterscheidet sich in Fig. 3 von einer weiteren Ausweichbewegung 12 dadurch, dass die erste Ausweichbewegung 11 einen ersten Lenkwinkelverlauf L1 umfasst und die weitere Ausweichbewegung 12 einen dazu verschiedenen weiteren Lenkwinkelverlauf L2 umfasst.

Während der ersten Ausweichbewegung 11 nimmt der Lenkwinkel L ausgehend von einer Nullstellung (entspricht z.B. Geradeausfahrt zum Zeitpunkt T0) linear mit einer ersten Steigung zu. Am Ende T1 des Zeitfensters Z erreicht der Lenkwinkel L daher einen Wert L1max.

Mit Ende T1 des Zeitfensters Z wird das Ausweichmanöver 10 mit der weiteren Ausweichbewegung 12 fortgesetzt. Die weitere Ausweichbewegung 12 umfasst mehrere Sequenzen S1, ..., S4 (in Fig. 3 durch Doppelpfeile gekennzeichnet). Jede der in Fig. 3 gezeigten Sequenzen S1, ..., S4 korrespondiert mit einem zugehörigen Klothoidensegment K1, ..., K4 (vgl. Fig. 2). Dies wird insbesondere dadurch deutlich, dass sich der Lenkwinkel L innerhalb der Sequenzen S1, ..., S4 linear ändert und hierdurch dafür sorgt, dass eine auf das Kraftfahrzeug 200 wirkende Querkraft sich in jeder Sequenz S1, ..., S4 gleichmäßig ändert, d.h. proportional zur Wegstrecke.

In der ersten Sequenz S1 nimmt der Lenkwinkel L ausgehend von dem Wert L1max mit einer weiteren Steigung zu. Ein Übergang von der ersten Ausweichbewegung 11 zu der weiteren Ausweichbewegung 12 ist nicht differenzierbar, sodass der Fahrer z.B. einen Ruck in Querrichtung Y verspürt, die ihm das Fortsetzen des automatisierten Ausweichmanövers 10 mit der weiteren Ausweichbewegung 12 haptisch vermittelt. Der Ablauf des Zeitfensters Z kann dem Fahrer somit ohne zusätzlichen Warnhinweis vermittelt werden.

Der Lenkwinkel L nimmt zum Ende der ersten Sequenz S1 einen Lenkwinkel L21max an, der z.B. einem maximalen Lenkeinschlag entgegen des Uhrzeigersinns des Lenkrads entspricht. Der weitere Lenkwinkelverlauf L2 weist somit einen betragsmäßig größeren Lenkwinkel L auf als der erste Lenkwinkelverlauf L1. Hierdurch wird der maximale Lenkeinschlag erst nach Ablauf des Zeitfensters Z durch die weitere Ausweichbewegung 12 erreicht.

In einer weiteren Sequenz S2 nimmt ein Betrag des Lenkwinkels L ausgehend von dem Lenkwinkel L21max linear ab, bis das Lenkrad wieder die Nullstellung erreicht. In der darauffolgenden Sequenz S3 nimmt der Betrag des Lenkwinkels L ausgehend von der Nullstellung wiederum linear zu, bis ein Lenkwinkel L22max erreicht ist, der z.B. einem maximalen Lenkeinschlag des Lenkrads des Kraftfahrzeugs 200 im Uhrzeigersinn entspricht. In der darauffolgenden Sequenz S4 wird den Lenkwinkel L so verändert, dass das Lenkrad abermals die Nullstellung erreicht und das Ausweichmanöver 10 abgeschlossen ist.

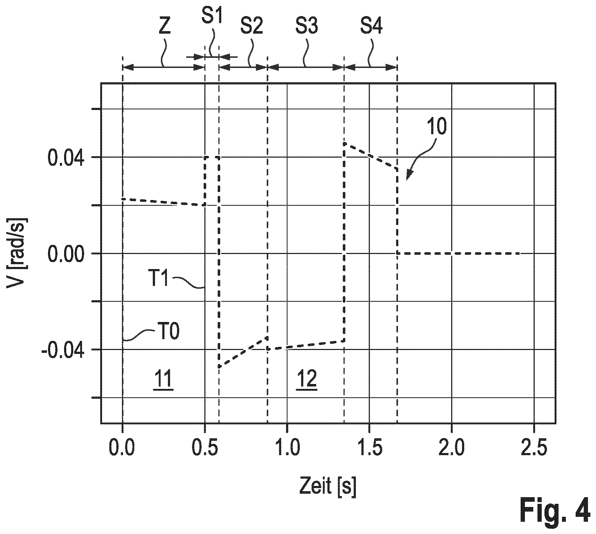

Fig. 4 zeigt ein schematisches Diagramm einer Lenkwinkelgeschwindigkeit V über der Zeit in Sekunden. Der dargestellte Verlauf der Lenkwinkelgeschwindigkeit V kann zu den in den Fig. 1, 2 und Fig. 3 erläuterten Szenarien korrespondieren.

Aus Fig. 4 ist ersichtlich, dass die Lenkwinkelgeschwindigkeit V während einer ersten Ausweichbewegung 11 des Ausweichmanövers 10 positiv ist. Die Lenkgeschwindigkeit V der ersten Ausweichbewegung 11 kann somit einem sanften Einlenken entsprechen. Beispielsweise wird ein Lenkrad (nicht dargestellt) des Kraftfahrzeugs 200 mittels eines Aktors (nicht dargestellt) gleichmäßig entgegen des Uhrzeigersinns gedreht.

In einer ersten Sequenz S1 einer weiteren Ausweichbewegung 12 springt die Lenkwinkelgeschwindigkeit V sprunghaft an. Die Lenkgeschwindigkeit V der ersten Sequenz S1 entspricht somit mit einem abrupten Einlenken. Beispielsweise wird das zuvor erläuterte Einlenken mit einer höheren Lenkwinkelgeschwindigkeit V fortgesetzt. Durch den sprunghaften Anstieg der Lenkgeschwindigkeit V kann der Fahrer das Fortsetzen des Ausweichmanövers 10 haptisch wahrnehmen, z.B. als Ruck im Lenkrad.

An die erste Sequenz S1 schließt sich eine weitere Sequenz S2 der weiteren Ausweichbewegung 12 an, in welcher die Lenkwinkelgeschwindigkeit V sprunghaft negativ wird. Die Lenkgeschwindigkeit V geht in der weiteren Sequenz S2 also mit einer Drehrichtung des Lenkrads (nicht dargestellt) im Uhrzeigersinn einher. Die Lenkgeschwindigkeit V in der Sequenz S2 entspricht somit einem abrupten Gegenlenken vor Durchschreiten der Nullstellung. Beispielsweise wird das Lenkrad in der weiteren Sequenz S2 schnell auf eine Nullstellung zurückgedreht.

An die weitere Sequenz S2 folgt eine Sequenz S3, in welcher ein Betrag der Lenkgeschwindigkeit V gegenüber dem Betrag der Lenkwinkelgeschwindigkeit V in der Sequenz S2 leicht reduziert ist. Die Lenkgeschwindigkeit V in der Sequenz S3 entspricht somit einem sanften Gegenlenken nach Durchschreiten der Nullstellung. Beispielsweise wird das Lenkrad (nicht dargestellt) mittels eines Aktors im Uhrzeigersinn weiter eingeschlagen.

Die Sequenz S2 ist zeitlich deutlich kürzer als die darauffolgende Sequenz S3. Denn ein Abbau des Lenkwinkels L hin zu einer Nullstellung ist fahrdynamisch ungefährlicher als ein Aufbau des Lenkwinkels L hin zu einem maximalen Lenkeinschlag ist. Hierdurch kann die für das Ausweichmanöver zur Verfügung stehende Zeit effektiv zur Kollisionsvermeidung genutzt werden.

An die Sequenz S3 schließt eine letzte Sequenz S4 an, in welcher die Lenkgeschwindigkeit V wieder positiv ist. Der Lenkwinkel L wird also von einem Wert L22max z.B. in die Nullstellung zurückgeführt (vgl. Fig. 3). Auf diese Weise kann das Kraftfahrzeug 200 in Fahrbahnrichtung X (vgl. Fig. 1) orientiert werden und das Ausweichmanöver 10 abgeschlossen werden. Mit Ende der Sequenz S4 fällt die Lenkgeschwindigkeit V auf null, sodass das Kraftfahrzeug 200 seine Fahrt in der Fahrspur 52 geradeaus fortsetzen kann.

Selbstverständlich muss sich das Lenkrad des Kraftfahrzeugs 200 nicht drehen, um das Ausweichmanöver 10 auszuführen. Die Erläuterungen dienen lediglich dem besseren Verständnis.

Abschließend sei noch erwähnt, dass die Lenkwinkelgeschwindigkeit V während der ersten Ausgleichbewegung 11 - und auch während der Sequenzen S1, ..., S4 der weiteren Ausweichbewegung 12 - mit der Zeit jeweils leicht abnimmt, da das Kraftfahrzeug 200 als Teil des Ausweichmanövers 10 verzögert wird und sich dies auf die Lenkwinkelgeschwindigkeit V auswirkt.

### Bezugszeichenliste

- 10: Ausweichmanöver
- 11: erste Ausweichbewegung
- 12: weitere Ausweichbewegung
- 50: Fahrbahn
- 51: Fahrspur mit Hindernis
- 52: Fahrspur ohne Hindernis
- 100: Assistenzsystem
- 200: Kraftfahrzeug
- 300: Hindernis
- K1, ..., K4: Klothoidensegmente der weiteren Ausweichbewegung
- L: Lenkwinkel
- L1: erster Lenkwinkelverlauf
- L1max: maximaler erster Lenkwinkel
- L2: weiterer Lenkwinkelverlauf
- L21max: maximaler weiterer Lenkwinkel
- L22max: maximaler weiterer Lenkwinkel
- S1, ..., S4: Sequenzen der weiteren Ausweichbewegung
- T0: Beginn des Zeitfensters
- T1: Ende des Zeitfensters
- X: Fahrbahnrichtung
- Y: Querrichtung
- Z: Zeitfenster

## Patentansprüche

1. Verfahren zur Kollisionsvermeidung für ein Kraftfahrzeug (200), umfassend die Schritte:
- Einleiten eines automatisierten Ausweichmanövers (10) des Kraftfahrzeugs (200) mit mindestens einer ersten Ausweichbewegung (11),
- Fortsetzen des automatisierten Ausweichmanövers (10) mit mindestens einer weiteren Ausweichbewegung (12), wenn ein Zeitfenster (Z) zur Korrektur des automatisierten Ausweichmanövers (10) abgelaufen ist, wobei die mindestens eine weitere Ausweichbewegung (12) von der mindestens einen ersten Ausweichbewegung (11) verschieden ist.

2. Verfahren nach Anspruch 1, **dadurch gekennzeichnet, dass** die mindestens eine erste Ausweichbewegung (11) einen ersten Lenkwinkelverlauf (L1) umfasst und die mindestens eine weitere Ausweichbewegung (12) einen weiteren Lenkwinkelverlauf (L2) umfasst, wobei der weitere Lenkwinkelverlauf (L2) einen betragsmäßig größeren Lenkwinkel (L21max) als der erste Lenkwinkelverlauf (L1) aufweist.

3. Verfahren nach einem der vorangegangenen Ansprüche, **dadurch gekennzeichnet, dass** ein Übergang von der ersten Ausweichbewegung (11) zu der weiteren Ausweichbewegung (12) nicht differenzierbar ist.

4. Verfahren nach einem der vorangegangenen Ansprüche, **dadurch gekennzeichnet, dass** die mindestens eine weitere Ausweichbewegung (12) mehrere Sequenzen (S1, ..., S4) umfasst, wobei in mindestens einer Sequenz (S2) ein Betrag des Lenkwinkels (L) abnimmt und in mindestens einer darauffolgenden Sequenz (S3) ein Betrag des Lenkwinkels (L) zunimmt, wobei die mindestens eine Sequenz (S2) zeitlich kürzer als die mindestens eine darauffolgende Sequenz (S3) ist.

5. Verfahren nach einem der vorangegangenen Ansprüche, **dadurch gekennzeichnet, dass** die mindestens eine weitere Ausweichbewegung (12) derart eingestellt wird, dass das Kraftfahrzeug (200) mindestens ein Klothoidensegment (K1, ..., K4) durchfährt.

6. Verfahren nach einem der vorangegangenen Ansprüche, **dadurch gekennzeichnet, dass** das Zeitfenster (Z) in Abhängigkeit eines detektierten Kollisionsrisikos bestimmt wird und/oder dass das Zeitfenster in Abhängigkeit von ermittelten Fahrerdaten bestimmt wird.

7. Verfahren nach einem der vorangegangenen Ansprüche, **dadurch gekennzeichnet, dass** die mindestens eine weitere Ausweichbewegung (12) innerhalb des Zeitfensters (Z) eingestellt wird.

8. Verfahren nach einem der vorangegangenen Ansprüche, **dadurch gekennzeichnet, dass** die mindestens eine weitere Ausweichbewegung (12) derart eingestellt wird, dass während des Ausweichmanövers (10) eine maximale Querkraft erreicht wird, ohne eine Kraftschlussgrenze zwischen Kraftfahrzeug (200) und Fahrbahn (50) zu überschreiten.

9. Assistenzsystem (100) für ein Kraftfahrzeug (200), wobei das Assistenzsystem (100) dazu ausgebildet ist, ein Verfahren nach einem der Ansprüche 1 bis 8 auszuführen.

10. Kraftfahrzeug (200), umfassend mindestens ein Assistenzsystem (100) nach Anspruch 9.
